# EUROPÄISCHE PATENTANMELDUNG

(11) **EP 0 691 428 A1**
(43) Veröffentlichungstag der Anmeldung: **10.01.1996**
(21) Anmeldenummer: 95104068.2
(22) Anmeldetag: 20.03.1995
(51) Int. Cl.: D01H 11/00, D01G 15/82, B01D 50/00

(54) **Filtervorrichtung zum Abscheiden von Feststoffen aus strömender Luft**

(30) Priorität: 03.06.1994 DE 4419406; 12.10.1994 DE 4436374
(71) Anmelder: LTG LUFTTECHNISCHE GMBH, D-70435 Stuttgart (DE)
(72) Erfinder: Günther, Klaus, Dipl.-Ing., D-71229 Leonberg (DE); Wenger, Paul, Dipl.-Ing., D-71254 Ditzingen (DE); Meldt, Rudolf, D-71272 Renningen (DE); Eidenbach, Silvia, D-70376 Stuttgart (DE)
(74) Vertreter: Grosse, Rainer, Dipl.-Ing.

(57) **Zusammenfassung**

Die Erfindung betrifft eine Filtervorrichtung zum Abscheiden von Fasern/Staub aus strömender Luft, mit einem Abscheider, dem die Luft über mindestens ein Lufteinlaßrohr zugeführt wird und der einen Hohlfilter aufweist, dessen Mantelwand von einem Filtermedium gebildet ist, die von innen nach außen von der Luft durchströmt wird, und mit einem Sammelbehälter für die abgeschiedenen Fasern, der sich unterhalb des Abscheiders befindet. Es ist vorgesehen, daß der Abscheider (33) als Tangentialabscheider (34) ausgebildet ist, in dessen oberen Bereich (13) das Lufteinlaßrohr (14) tangential mündet und daß für einen rückwirkungsfreien Betrieb zwischen Hohlfilter (9) und Sammelbehälter (20) eine den Faseraustrag bei einer Sammelbehälterentleerung oder dergleichen unterbrechende Verschlußeinrichtung (23) angeordnet ist.

## Beschreibung

Die Erfindung betrifft eine Filtervorrichtung zum Abscheiden von Fasern/Staub aus strömender Luft, mit einem Abscheider, dem die Luft über mindestens ein Lufteinlaßrohr zugeführt wird und der ein Hohlfilter aufweist, dessen Mantelwand von einem Filtermedium gebildet ist, die von innen nach außen von der Luft durchströmt wird, und mit einem Sammelbehälter für die abgeschiedenen Fasern, der sich unterhalb des Abscheiders befindet.

Eine Filtervorrichtung der eingangs genannten Art ist aus der deutschen Patentschrift 25 42 300 bekannt. Derartige Einrichtungen dienen beispielsweise in der Textiltechnik dem Entsorgen der Textilmaschinen, indem insbesondere die mit Fasergut belastete Maschinenabluft der Filtervorrichtung zugeführt wird. Hier erfolgt eine Vorfilterung. Vorzugsweise ist nach der Vorfilterung noch eine weitere Filterstufe mittels eines Trommelfilters vorgesehen. Es ist jedoch auch möglich, daß die Luftreinigung ausschließlich mit der im Oberbegriff erwähnten Filtervorrichtung durchgeführt wird. Die bekannte Filtervorrichtung ist kein Endabscheider, der das Material aus dem Luftstrom ausscheidet, sondern die Filtervorrichtung selbst muß wiederum durch ein System entleert werden. Bei der Entsorgung eines die abgeschiedenen Fasern und dergleichen aufnehmenden Sammelbehälters ergeben sich Druckstöße und Volumenstromschwankungen in der Anlage. Ferner beansprucht die bekannte Filtervorrichtung eine relativ große Stellfläche.

Der Erfindung liegt daher die Aufgabe zugrunde, eine Filtervorrichtung der eingangs genannten Art zu schaffen, die das abgeschiedene Material endgültig aus dem Prozeßluftstrom ausscheidet, die keine Rückwirkung auf den Prozeßluftstrom hat und die nur eine relativ kleine Stellfläche einnimmt.

Diese Aufgabe wird erfindungsgemäß dadurch gelöst, daß der Abscheider als Tangentialabscheider ausgebildet ist, in dessen oberen Bereich das Lufteinlaßrohr tangential mündet und daß für einen rückwirkungsfreien Betrieb zwischen Hohlfilter und Sammelbehälter eine Verschlußeinrichtung angeordnet ist. Aufgrund der Verschlußeinrichtung kann eine Entleerung des Sammelbehälters auch ohne Betriebsstörung erfolgen. Die zum Entsorgen in Schließstellung verbrachte Verschlußeinrichtung verhindert, daß im Zeitraum der Sammelbehälterentleerung die anfallenden Feststoffe (insbesondere Fasern und Staub) unkontrolliert ausgetragen werden. Sie sammeln sich vielmehr im Abscheider und werden dort sozusagen "zwischengelagert". Wird der Sammelbehälter nach seiner Entleerung der Filtervorrichtung wieder zugeordnet und die Verschlußeinrichtung geöffnet, so entleert sich der Abscheider und die Vorrichtung nimmt wieder ihren Normalbetrieb auf. Durch die Ausbildung des Abscheiders als Tangentialabscheider, bei dem die zu reinigende Luft mittels mindestens eines entsprechenden Lufteinlaßrohres tangential zur Hohlfilter-Hochachse in den von der Mantelwand des Filtermediums umschlossenen Raum eingeleitet wird, ergibt sich eine große dynamische Energie, die zur Faserabscheidung genutzt wird. Durch die tangentiale Zuströmung wird ein Wirbel im Innern des Hohlfilters erzeugt, der die Fasern an die Mantelwand zur Abscheidung treibt und wobei diese durch den vorliegenden Zyklonenwirbel nach unten transportiert und somit dem Sammelbehälter zugeleitet werden. Da das Lufteinlaßrohr beziehungsweise die Lufteinlaßrohre in den oberen Bereich des Tangentialabscheiders münden, wird für die Luftzuführung kein seitlicher Raum benötigt, so daß die erfindungsgemäße Filtervorrichtung eine schlanke Bauform aufweist. Vorzugsweise wird die Strömung der Luft von einem Ventilator erzeugt, der integraler Bestandteil der Filtervorrichtung ist. Vorzugsweise befindet er sich seitlich neben einem das Hohlfilter aufnehmenden Raum der Vorrichtung. Der Ventilator ist vorzugsweise als Saugventilator ausgebildet, das heißt er saugt die zu reinigende Luft an, so daß diese den Tangentialabscheider passiert. Der Tangentialabscheider ist also stromaufwärts des Saugventilators angeordnet.

Wie erwähnt wird durch die Ausbildung der Zuströmung eine Drehströmung erzeugt, die voll ausgebildet ist , ehe der Filterbereich erreicht ist. Dadurch wird gewährleistet, daß die ausgebildete Strömung die Fasern an der Innenseite des Hohlfilters nach unten treibt.

Die Verschlußeinrichtung ist vorzugsweise als Verschlußklappe ausgebildet. Sie öffnet sich bevorzugt derart, daß sie in das Innere des Sammelbehälters eintritt. Vorzugsweise ist die Grundfläche der Verschlußklappe als Kreisabschnitt ausgebildet, wobei der Kreis der Kontur der Mantelwand des Hohlfilters entspricht.

Die Verschlußklappe wird vorzugsweise mittels einer Betätigungseinrichtung verschwenkt. Die Betätigungseinrichtung weist insbesondere einen elektrischen Antrieb auf. Zum Entleeren des Sammelbehälters wird die Betätigungseinrichtung mittels eines Schalters oder dergleichen angesteuert, um die Verschlußklappe in Schließstellung zu schwenken. Der Betrieb der Filtervorrichtung bleibt aufrechterhalten. Der Sammelbehälter kann nun entnommen und nach Entleerung der Vorrichtung wieder zugeordnet werden. Wird anschließend die Verschlußklappe mittels der Betätigungseinrichtung wieder in Offenstellung verbracht, so entleert sich das zwischengelagerte Fasergut in den Sammelbehälter und die Vorrichtung geht von dem zuvor eingenommenen Behälterentleerungsbetrieb wieder in den Normalbetrieb über.

Als Betätigungseinrichtung der Verschlußeinrichtung können jedoch auch pneumatische, hydraulische oder manuelle Einrichtungen eingesetzt werden.

Der Sammelbehälter ist vorzugsweise zur Einnahme seiner Entleerungsstellung verlagerbar. Dies kann bevorzugt in seitlicher Richtung nach Art eines fahrbaren Wagens beziehungsweise nach dem "Schubladenprinzip" erfolgen. Um eine möglichst luftdichte Abdichtung des Sammelbehälters zum Abscheider zu erzielen, ist bevorzugt eine Höhenverlagerbarkeit des Sammelbehälters relativ zum Abscheider vorgesehen. Hierdurch läßt sich der Sammelbehälter mit Anpreßdruck in Richtung auf den Abscheider verlagern, wodurch Trennspalte geschlossen werden. Vorzugsweise befinden sich zwischen Sammelbehälter und Abscheider Dichtungen, die einen hermetischen Abschluß herbeiführen.

Insbesondere ist vorgesehen, daß Hohlfilter und Sammelbehälter über mindestens zwei Öffnungen miteinander in Verbindung stehen, wobei die eine Öffnung eine mittels der Verschlußeinrichtung absperrbare Faserzuführöffnung und die andere Öffnung eine mittels der oder einer weiteren Verschlußeinrichtung absperrbare Luftrückführöffnung bildet und daß sich zwischen den Öffnungen eine Prallwand für die Fasern befindet. Aufgrund dieser Ausbildung wird der ausgefilterte Faserstrom im Zuge der Drallströmung in Richtung einer Trennwand zwischen Hohlfilter und Sammelbehälter bewegt und durchdringt dabei die Faserzuführöffnung und gelangt dadurch in den Sammelbehälter. Die hierfür verwendete Transportluft muß -für einen Druckausgleich- den Sammelbehälter wieder verlassen und zurück in den Hohlfilter strömen. Dies erfolgt durch die zweite Öffnung, die als Luftrückführöffnung ausgebildet ist. Da sich zwischen den beiden Öffnungen, nämlich zwischen der Faserzuführöffnung und der Luftrückführöffnung die Prallwand befindet, ist ein rückwirkungsfreier Betrieb gewährleistet, das heißt, daß der durch die tangentiale Zuströmung in dem Abscheider erzeugten, faserbehafteten Drallströmung die Prallwand derart entgegengestellt ist, daß sie die Fasern optimal durch die Faserzuführöffnung hindurch dem Sammelbehälter zuführt und daß anschließend die im wesentlichen faserfreie Rückluft durch die Luftrückführöffnung hindurch zurück in den Luftkreislauf der Filtervorrichtung gelangt. Die abzuscheidenden Fasern wirbeln also nicht undefiniert im Abscheider herum, sondern werden geordnet und im wesentlichen unbehelligt durch die rückströmende Luft (also rückwirkungsfrei) ausgetragen.

Vorzugsweise ist vorgesehen, daß die Faserzuführöffnung in bezug zur Hohlfiltermittelachse außermittig angeordnet ist und sich hinsichtlich der Strömungsrichtung einer die Fasern transportierenden Drallströmung vor der Prallwand befindet. Bei der "Hohlfiltermittelachse" handelt es sich um eine vertikal verlaufende Achse des Hohlfilters, das eine kreiszylindrische Mantelwand aufweist. Es kann vorgesehen sein, daß sich das Filtermedium bis nach unten zur Trennwand erstreckt oder daß das Filtermedium oberhalb der Trennwand endet und sich daher dort ein luftundurchlässiger, bis zur Trennwand erstreckender kreiszylindrischer Wandungsabschnitt des Hohlfilters anschließt. Die abzuscheidenden Fasern werden somit -aufgrund der Drallströmung- entlang dieses Wandungsabschnitts bewegt und gelangen dann -im Zuge ihrer weiteren Abwärtsbewegungschließlich bis zur Faserzuführöffnung der Trennwand.

Insbesondere ist vorgesehen, daß sich die Luftrückführöffnung im Bezug zur Drallströmung hinter der Prallwand befindet.

Die Prallwand weist vorzugsweise einen radialen Verlauf auf. "Radial" ist in dem Sinne zu verstehen, daß sich die Prallwand -ausgehend von der Mantelwand des Hohlfilters- bis etwa in den Bereich der Hohlfiltermittelachse erstreckt.

Vorzugsweise ist vorgesehen, daß ein Teil der Prallwand die Faserzuführöffnung und/oder die Luftrückführöffnung nach oben hin überragt. Weist der Hohlfilter unterhalb seines Filtermediums den zuvor erwähnten luftundurchlässigen Wandungsabschnitt auf, so ist vorzugsweise vorgesehen, daß der Teil der Prallwand, der die Faserzuführöffnung und/oder die Luftrückführöffnung überragt, eine Überraglänge aufweist, die der Höhe des zuvor erwähnten Wandungsabschnitts entspricht. Sofern jedoch dieser Wandungsabschnitt nicht undurchlässig, sondern als Teil des Filtermediums ausgebildet ist, ist es für eine optimale Faserführung ebenfalls vorteilhaft, wenn die Prallwand die zuvor erwähnte Überraglänge aufweist. Dadurch, daß der überragende Teil der Prallwand bis an die Innenseite der Mantelwand des Hohlzylinders verläuft, werden die mittels der Drallströmung transportierten Fasern im wesentlichen in den Eckbereich zwischen Mantelwand und Prallwand geleitet und von dort aus zur tiefer gelegenen Faserzuführöffnung geleitet.

Nach einer Weiterbildung der Erfindung ist vorgesehen, daß die Prallwand die Faserzuführöffnung und/oder die Luftrückführöffnung in radialer Richtung überragt, insbesondere etwa von der Mantelwand des Hohlfilters bis etwa zur Hohlfiltermittelachse verläuft. Die Faserzuführöffnung und/oder die Luftrückführöffnung weist -in radialer Richtung gesehen- somit eine kleinere Abmessung als die Prallwand auf. Durch das radiale Überragen der Prallwand ist sichergestellt, daß sich dort befindliche Fasern, im Zuge ihrer mittels der Drallströmung erfolgenden Bewegung, gegen die Prallwand treffen und radial nach außen wandern, wobei sie dann zur Faserzuführöffnung gelangen.

Insbesondere kann vorgesehen sein, daß die Faserzuführöffnung und/oder die Luftrückführöffnung einem Faserzuführkanal beziehungsweise einem Luftrückführkanal angehören. Mithin ist der Durchtritt vom Hohlfilter in den den Sammelbehälter aufweisenden Raum vorzugsweise nicht nur jeweils als Öffnung in einer dünnwandigen Trennwand vorgesehen, sondern es sind entsprechende Verbindungswege vorgesehen, die eine im wesentlichen vertikal verlaufende Ausdehnung aufweisen. Diese Wegausdehnung ist vorteilhaft für die Luftführung und schafft geordnete Strömungsverhältnisse. Insbesondere kann vorgesehen sein, daß der Faserzuführkanal und/oder Luftrückführkanal geneigt zur Hohlfiltermittelachse verlaufen. Gekoppelt damit -oder auch unabhängig davonist es besonders vorteilhaft, wenn die Prallwand schräg der Drallströmung entgegengeneigt angeordnet ist. Auf diese Art und Weise ist sichergestellt, daß gegen die Prallwand tretende Fasern im Zuge ihrer weiteren Bewegung nach unten zur Faserzuführöffnung geleitet werden.

Nach einer Weiterbildung der Erfindung ist vorgesehen, daß die Prallwand an ihrem unteren Endbereich im Öffnungsbereich der Faserzuführöffnung und/oder der Luftrückführöffnung sich verbreiternd ausgebildet ist. Insbesondere kann vorgesehen sein, daß der untere Endbereich von zwei sich aufspreizenden Wänden gebildet wird. Diese Verbreiterung, die zu einer Verengung von Faserzuführkanal und/oder Luftrückführkanal führt, wirkt sich positiv auf die Luftführung und die Faserablegung aus.

Die Zeichnungen veranschaulichen die Erfindung anhand von Ausführungsbeispielen und zwar zeigt:
- Figur 1: eine Seitenansicht der Filtervorrichtung im Schnitt,
- Figur 2: eine Schnittansicht entlang der Linie II-II in Figur 1,
- Figur 3: eine Draufsicht auf die Einrichtung gemäß Figur 1,
- Figur 4: eine Seitenansicht einer Filtervorrichtung, teilweise im Schnitt,
- Figur 5: eine Seitenansicht im Bereich einer Trennwand zwischen einem Hohlfilter und einem Sammelbehälter der Filtervorrichtung,
- Figur 6: eine Ansicht des Gegenstands der Figur 5 in Richtung des Pfeiles III,
- Figur 7: eine Draufsicht auf den Gegenstand der Figur 5 in Richtung des Pfeiles IV,
- Figur 8: eine Schnittansicht entlang der Linie A-B in Figur 7,
- Figur 9: eine Schnittansicht entlang der Linie C-D in Figur 7 und
- Figur 10: eine Seitenansicht eines anderen Ausführungsbeispiels einer Filtervorrichtung, teilweise im Schnitt.

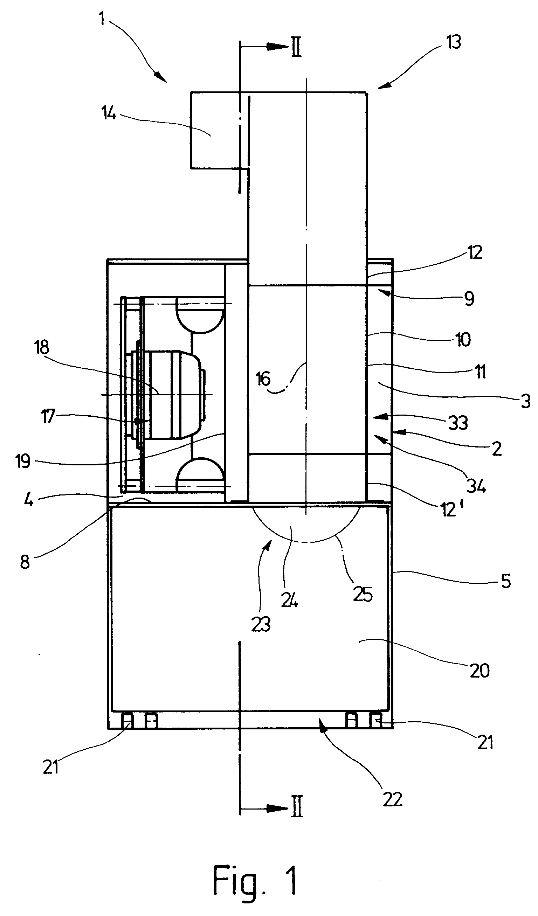

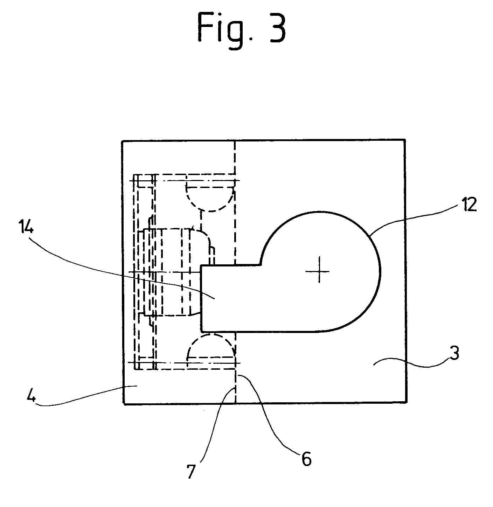

Die Figur 1 zeigt eine Filtervorrichtung 1, die dem Abscheiden von Feststoffen, insbesondere Fasern, Staub und so weiter aus strömender Luft dient. Die Filtervorrichtung 1 weist ein Gehäuse 2 auf, das eine Filterkammer 3, eine Ventilatorkammer 4 und eine Behälterkammer 5 aufweist. Die Filterkammer 3 weist -gemäß Figur 3- einen rechteckigen Grundriß auf. Die Ventilatorkammer 4 besitzt ebenfalls einen rechteckigen Grundriß, wobei die beiden Längsseiten 6,7 der Filterkammer 3 sowie der Ventilatorkammer 4 aneinander grenzen (Figur 3). Unterhalb der Filterkammer 3 und der Ventilatorkammer 4 ist die Behälterkammer 5 angeordnet, die insofern den gesamten Grundriß der Filtervorrichtung 1 einnimmt. Die Behälterkammer 5 ist mittels einer Trennwand 8 von der Filterkammer 3 und der Ventilatorkammer 4 abgegrenzt.

In der Filterkammer 3 befindet sich ein Abscheider 33, der als Tangentialabscheider 34 ausgebildet ist. Ebenso befindet sich innerhalb der Filterkammer 3 ein Hohlfilter 9, dessen Mantelwand 10 von einem Filtermedium 11 gebildet ist. Das Filtermedium 11 wird mittels nicht mehr dargestellter Spannringe an einem oberen und einem unteren Ringwandabschnitt 12 beziehungsweise 12' des Hohlfilters 9 auswechselbar gehalten. Der Ringwandabschnitt 12 des Hohlfilters 9 grenzt an eine Deckenwand 13' des Hohlfilters 9 an, die sich über den gesamten Grundriß der Filtervorrichtung 1 fortsetzt. In den Hohlfilter 9 mündet die Zuströmung im Einlaßrohr 14. Wie insbesondere der Figur 3 zu entnehmen ist, mündet die Zuströmung tangential in den Abscheider 33.

In der Ventilatorkammer 4 befindet sich ein Ventilator 17, der als Saugventilator 18 ausgebildet ist. Er steht über eine Ansaugöffnung 19 mit der Filterkammer 3 in Verbindung. Zum Abführen der vom Saugventilator 18 geförderte Luft ist ein entsprechender Anschluß (nicht dargestellt) an der Ventilatorkammer 4 vorgesehen.

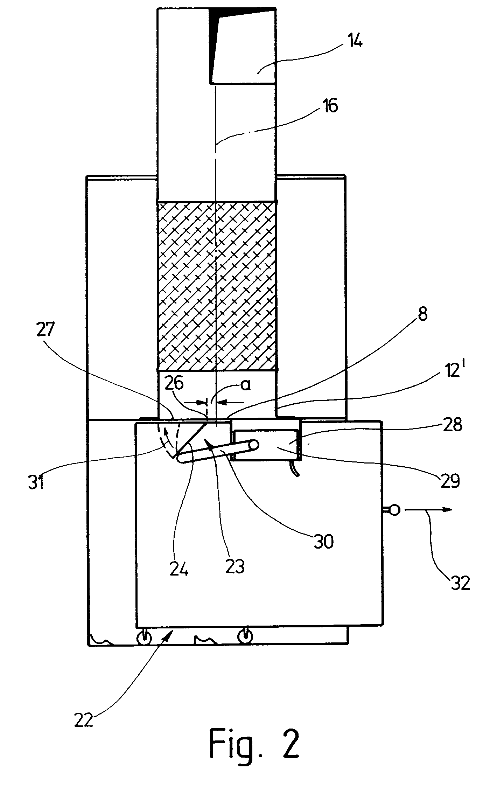

In der Behälterkammer 5 ist ein Sammelbehälter 20 nach Art einer Schublade seitlich herausziehbar gelagert. Hierzu weist der Sammelbehälter 20 Rollen 21 auf. Ferner ist eine Hubeinrichtung 22 vorgesehen, die beispielsweise nach dem Prinzip einer schrägen Ebene arbeitet, mittels der eine Höhenverlagerung des Sammelbehälters 20 durchgeführt werden kann, so daß seine Oberseite hermetisch dicht an die Unterseite der Trennwand 8 -insbesondere im Bereich des Hohlfilters 9- anpreßbar ist, in Figur 2 gezeigt. Vorzugsweise können zur Abdichtung in diesem Bereich angeordnete Dichtungen (nicht dargestellt) vorgesehen sein.

Die Trennwand 8 weist im Innern des im Querschnitt kreisförmigeß Hohlfilters 9 eine Verschlußeinrichtung 23 auf, die im geöffneten Zustand das Innere des Hohlfilters 9 mit dem Sammelbehälter 20 verbindet. Die Verschlußeinrichtung 23 ist als Verschlußklappe 24 ausgebildet, die -gemäß Figur 1-einen kreisabschnittförmigen Querschnitt aufweist. Der teilkreisförmige Rand 25 der Verschlußklappe 24 grenzt -in Schließstellung der Verschlußklappe 24-an die Peripherie der Mantelwand 10 des Ringwandabschnitts 12' an. Der Drehpunkt 26 (Scharnierachse) verläuft -gemäß Figur 2- um das Maß a versetzt zur Hohlfilter-Hochachse 16 derart, daß sich in der Trennwand 8 eine ebenfalls kreisabschnittförmige Öffnung 27 ergibt, die mittels der Verschlußklappe 24 verschließbar ist.

In der Figur 2 ist die Offenstellung der Verschlußklappe 24 erkennbar. In dieser Offenstellung befindet sich die Verschlußklappe 24 innerhalb des Sammelbehälters 22.

Für die Betätigung der Verschlußklappe 24 ist eine Betätigungseinrichtung 28 vorgesehen, die einen elektrischen Antrieb 29 aufweist, der auf einen Schwenkhebel 30 wirkt, dessen Ende an der Verschlußklappe 24 anliegt. Verschwenkt der Schwenkhebel 30 durch Einschalten des elektrischen Antriebs 29 in Uhrzeigerrichtung (Figur 2) so bewegt sich die Verschlußklappe 24 in Richtung des Pfeiles 31 und gelangt somit aus ihrer Offenstellung in die Schließstellung. Die Betätigungseinrichtung 28 ist ortsfest an der Unterseite der Trennwand 8 mittels einer geeigneten Halterung befestigt.

Es ergibt sich folgende Funktionsweise:
Wird der Saugventilator 18 in Betrieb gesetzt, so entsteht in der Filterkammer 3 ein Unterdruck, wodurch Luft über den Zuströmungsbereich angesaugt wird. Der Zuströmungsbereich kann vorzugsweise als Rohrstutzen ausgebildet sein, der über flexible Luftleitungen beispielsweise mit Textilmaschinen in Verbindung steht. Insofern wird mit Fasern und Staub beaufschlagte Luft in das Innere des Hohlfilters 9 zyklonartig eingesaugt. Aufgrund des sich ausbildenden Wirbels werden die in der Luft enthaltenen Fasern an der Innenseite des Filtermediums 11 abgeschieden und wandern nach unten in Richtung auf die Öffnung 27. Die Luft durchsetzt das Filtermedium 11 und durchströmt die Ansaugöffnung 19, den Ventilator 17 und verläßt anschließend die Ventilatorkammer 4 über einen nicht dargestellten Auslaß. Die sich sammelnden Feststoffe im unteren Bereich des Hohlfilters 9 treten in die Öffnung 27 ein und gelangen bei Offenstellung der Verschlußklappe 24 in den Sammelbehälter 20. Ist das Fassungsvermögen des Sammelbehälters 20 erschöpft, so wird beispielsweise mittels Knopfdruck oder mittels eines Sensors die Betätigungseinrichtung 28 aktiviert, die vorzugsweise pneumatisch oder mechanisch ausgebildet sein kann, und über den Schwenkhebel 30 die Verschlußklappe 24 geschlossen. Die Betätigungseinrichtung 28 kann -nach einem bevorzugten Ausführungsbeispiel- ferner den Sammelbehälter 20 entriegeln. Es ist jetzt möglich, den Sammelbehalter 20 in Richtung des Pfeiles 32 (Figur 2) seitlich herauszuziehen und zu entleeren. Während dieser Entleerungsphase arbeitet die Filtervorrichtung 1 weiter, das heißt weiterhin wird die ankommende Luft mittels des Hohlfilters 9 gereinigt. Die anfallenden Feststoffe sammeln sich oberhalb der Trennwand 8 im Bereich des Ringwandsabschnitts 12', das heißt im unteren Teil des Hohlfilters 9. Ist die Entleerung beendet und der Sammelbehälter 20 in seine Ursprungstellung zurückgeschoben, so wird manuell oder automatisch mittels Aktivierung der Betätigungseinrichtung 28 die Verschlußklappe 24 wieder in Offenstellung verbracht, wodurch das inzwischen angesammelte Filtergut in den Sammelbehälter 20 entsorgt wird. Insgesamt kann somit ein unterbrechungsfreier Betrieb erfolgen.

Das Verlagern des Sammelbehälters 20 kann von Hand oder per Antrieb erfolgen. Ferner ist dem Sammelbehälter 20 eine Hubeinrichtung 22 zugeordnet, die einen Anpreßdruck an die Unterseite der Trennwand 28 vornimmt. Für eine Behälterentleerung wird daher der Sammelbehälter 20 zunächst abgesenkt und erst dann seitlich herausgezogen. Beim Wiedereinfahren des Sammelbehälters 20 wird dieser zunächst in seine Einschubstellung verbracht und dann mittels der Hubeinrichtung 22 in die Stellung gemäß Figur 1 gehoben.

Wie vorstehend erwähnt, wird das Filtermedium 11 vorzugsweise mittels zweier Ringe, die als Spannschellen wirken, an den Ringwandabschnitten 12 und 12' verspannt. Sofern die Filterkammer 3 eine Tür aufweist, ist eine einfache Zugänglichkeit zum Beispiel zum Austausch des Filtermediums 11 gegeben, ohne daß aufwendige Montagearbeiten oder ein Ausbau der gesamten Einheit erfolgen muß.

Der Saugventilator 18 weist vorzugsweise einen Außenläufermotor auf, dem ein Laufrad zugeordnet ist. Im Bereich der Ansaugöffnung 19 ist bevorzugt eine Einströmdüse ausgebildet.

Bevorzugt ist eine elektrische Verriegelung vorgesehen, die ein Herausziehen des Sammelbehälters 20 bei offener Verschlußklappe 24 verhindert.

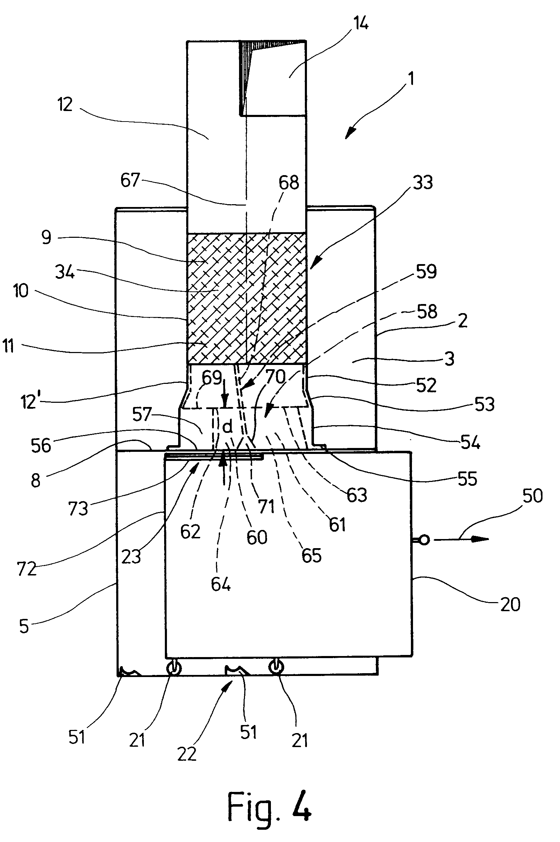

Die Figur 4 zeigt eine weitere Ausgestaltungsform einer Filtervorrichtung 1, die dem Abscheiden von Feststoffen, insbesondere Fasern, Staub und dergleichen aus strömender Luft dient.

Die Filtervorrichtung 1 weist ein Gehäuse 2 auf, in dem eine Filterkammer 3 und eine seitlich davon liegende, in der Figur 4 nicht dargestellte Ventilatorkammer sowie eine Behälterkammer 5 angeordnet ist.

Die Filterkammer 3 besitzt einen rechteckigen Grundriß. An sie grenzt die Ventilatorkammer seitlich an. Die Behälterkammer 5 ist unterhalb der Ventilatorkammer angeordnet. Zwischen Behälterkammer 5 und Filterkammer 3 befindet sich eine Trennwand 8.

In der Filterkammer 3 befindet sich ein Abscheider 33, der als Tangentialabscheider 34 ausgebildet ist. Er weist ein Hohlfilter 9 auf, das eine Mantelwand 10 besitzt. Ein Abschnitt der Mantelwand 10 wird von einem Filtermedium 11 gebildet. Die Mantelwand 10 ist als Hohlzylinder ausgebildet. Das Filtermedium 11 wird mittels nicht dargestellter Spannringe an einem oberen Ringwandabschnitt 12 sowie einem unteren Ringwandabschnitt 12' des Hohlfilters 9 auswechselbar gehalten. Der Ringwandabschnitt 12' bildet somit einen luftundurchlässigen Wandungsabschnitt des Hohlfilters 9. In den Ringwandabschnitt 12 mündet tangential ein Einlaßrohr 14 für die zuströmende, mit Fasern, Staub usw. versehene Luft. Hierdurch wird innerhalb des Tangentialabscheiders 34 eine tangentiale Drallströmung erzeugt.

In der in Figur 4 nicht dargestellten Ventilatorkammer befindet sich ein Ventilator, der als Saugventilator ausgebildet ist und Luft aus der Filterkammer 3 absaugt. Hierdurch werden die sich in der Drallströmung innerhalb des Hohlfilters 9 befindlichen Fasern an der Innenseite des Filtermediums 11 abgeschieden, das heißt die Luft durchströmt das Filtermedium von innen nach außen. Die abgeschiedenen Fasern wandern -angetrieben durch die Drallströmung- im Zuge des weiteren Betriebs auf einer schraubenlinienförmigen Bahn weiter nach unten und gelangen in den Bereich des Ringwandabschnitts 12' beziehungsweise der Trennwand 8. Hierauf wird nachstehend noch näher eingegangen.

In der Behälterkammer 5 ist ein Sammelbehälter 20 nach Art einer Schublade seitlich herausziehbar (Pfeil 50) gelagert. Hierzu kann der Sammelbehälter 20 an nicht dargestellten Teleskopschienen oder aber -wie in Figur 4 wiedergegeben- auf Rollen 21 gelagert sein. In der Figur 4 ist eine teilweise herausgezogene Stellung des Sammelbehälters 20 gezeigt. Im vollkommen eingeschobenen Zustand wird der Sammelbehälter 20 mittels einer Hubeinrichtung 22 nach oben verlagert, so daß er dichtend gegen die Trennwand 8 tritt. Die Hubeinrichtung 22 kann auf verschiedene, dem Fachmann bekannte Arten ausgebildet sein. Es ist beispielsweise -wie in Figur 4 dargestellt- möglich, die Rollen 21 auf Festlegblöcke 51 zu verfahren, die einerseits die Stellung des Sammelbehälters 20 fixieren und andererseits ein Anheben des Behälters 20 bewirken. Zur erwähnten Abdichtung können vorzugsweise nicht dargestellte Dichtungen vorgesehen sein.

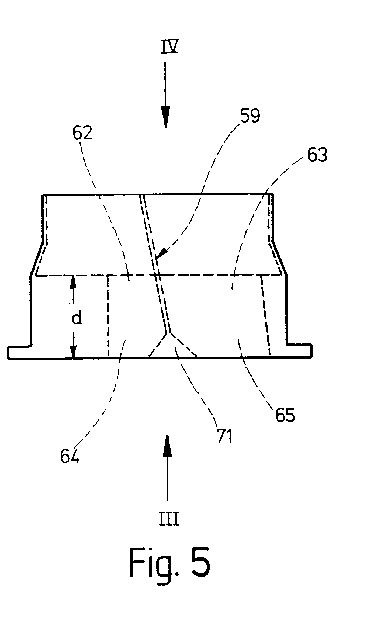

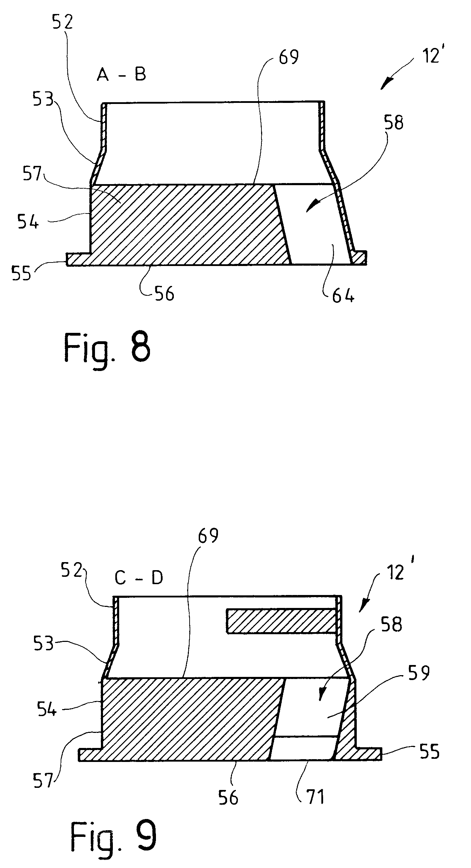

Der Ringwandabschnitt 12' des Hohlfilters 9 weist hinsichtlich des Eindringens von mittels des Tangentialabscheiders 34 abgeschiedener Fasern in den Sammelbehälter 20 eine spezielle Ausbildung auf, die in allgemeiner Form aus der Figur 4 und im Detail aus den Figuren 5 bis 9 hervorgeht. Hierzu ist anzumerken, daß dieser Ringwandabschnitt 12' als separates Teil oder aber auch einstückig mit den übrigen Teilen des Hohlfilters 9 ausgebildet sein kann.

Gemäß Figur 4 besitzt der Ringwandabschnitt 12' einen zylindrischen Abschnitt 52, der -nach obenan das Filtermedium 11 angrenzt und -nach unten- in einen Ringkegelabschnitt 53 übergeht. Hieran schließt sich ein gegenüber dem zylindrischen Abschnitt 52 mit größerem Durchmesser versehener zylindrischer Abschnitt 54 an, der einen Flansch 55 aufweist, welcher auf der Oberseite der Trennwand 8 befestigt ist. Der zylindrische Abschnitt 52, der Ringkegelabschnitt 53 und der zylindrische Abschnitt 54 weisen jeweils eine Kreiskontur auf.

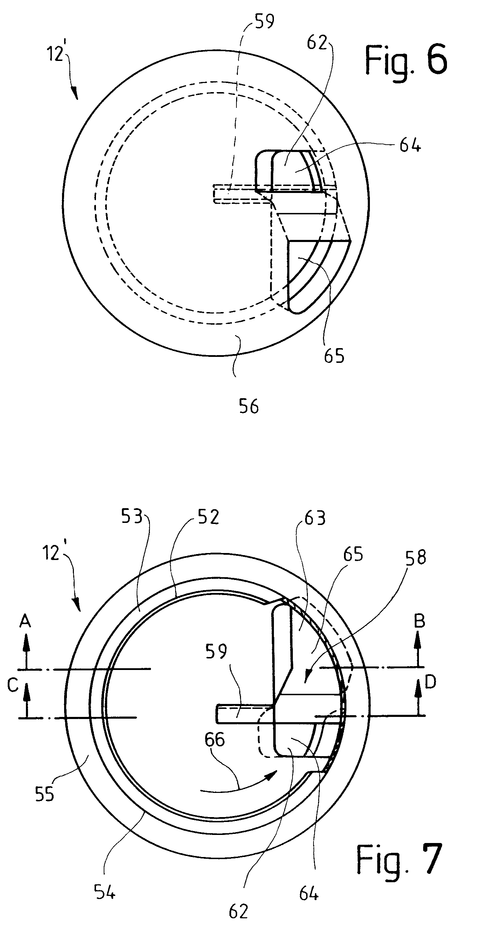

Ausgehend von der an die Trennwand 8 angrenzenden Unterkante 56 erstreckt sich innerhalb des zylindrischen Abschnitts 54 eine kreisförmige, dicke Wandung 57, die vorzugsweise eine Dicke d von 100 mm aufweist. Diese Wandung 57 wird -gemäß der Figuren 6, 7, 8 und 9 von einem Durchbruch 58 durchsetzt, der mittels einer Prallwand 59 in eine erste Öffnung 60 und eine zweite Öffnung 61 unterteilt wird. Die erste Öffnung 60 bildet eine Faserzuführöffnung 62 und die zweite Öffnung 61 eine Luftrückführöffnung 63. Aufgrund dessen, daß die Wandung 57 eine große Dicke d aufweist, sind diese Öffnungen 60 und 61 Bestandteile von Kanälen, nämlich einem Faserzuführkanal 64 und einem Luftrückführkanal 65. Sowohl der Faserzuführkanal 64 als auch der Luftrückführkanal 65 bilden somit eine Verbindung zwischen Tangentialabscheider 34 und Sammelbehälter 20. Aus der Figur 4 ist ersichtlich, daß die Prallwand 59 im wesentlichen senkrecht, jedoch schräg geneigt verläuft, derart, daß sie der Drallströmung 66 (Figur 7) entgegengeneigt angeordnet ist. Ferner zeigen die Figuren, daß Faserzuführkanal 64 und Luftrückführkanal 65 hinsichtlich der Hohlfiltermittelachse 67 (Figur 4) nicht mit vertikal verlaufenden Wandungen versehen sind, sondern zur Vertikalen geneigt verlaufen.

Der Grundriß des Faserzuführkanals 64 ist etwa rechteckförmig; der Grundriß des Luftrückführkanals 65 etwa dreieckförmig, wobei die äußere Peripherie kreisbogenförmig ausgebildet ist. Insbesondere ist der Figur 4 zu entnehmen, daß die Prallwand 59 mit einem Teil 68 die Oberseite 69 der Wandung 57 überragt, wobei sie sich bis in Höhe des unteren Endes des Filtermediums 11 erstreckt. Aus den Figuren 6 und 7 ist zu entnehmen, daß die Prallwand 59 von der inneren Mantelwand des zylindrischen Abschnitts 52 beziehungsweise des Ringkegelabschnitts 53 ausgeht, sich über die entsprechende Breite von Faserzuführöffnung 62 und Luftrückführöffnung 63 erstreckt und ferner bis etwa in den Bereich der Hohlfiltermittelachse 67 verläuft. Somit überragt die sich radial erstreckende Prallwand 59 die entsprechenden Kanäle 64 und 65.

Der Figur 4 ist zu entnehmen, daß die Prallwand 59 an ihrem unteren Endbereich 70 -im Öffnungsbereich von Faserzuführkanal 64 und Luftruckführkanal 65-sich verbreiternd ausgebildet ist. Die Verbreiterung 71 ist nach Art eines Dreieck-Profils ausgebildet. Insbesondere kann vorgesehen sein, daß sie mittels zwei sich aufspreizenden Wänden realisiert ist.

Beim Ausführungsbeispiel der Figur 4 ist der Sammelbehälter 20 -wie bereits erwähnt- ein Teilstück seitlich aus der Behälterkammer 5 nach Art einer Schublade herausfahrbar. Die Herausfahrbewegung wird gestoppt wenn die hintere Rolle 21 gegen den vorderen Festlegblock 51 tritt.

An der Rückwand 72 des Sammelbehälters 20 ist ein Schieber 73 befestigt, der parallel zur Trennwand 8 verläuft und -in der ausgezogenen Stellung des Sammelbehälters 20- den Faserzuführkanal 64 und auch den Luftrückführkanal 65 im Bereich der Trennwand 8 überdeckt. Hierdurch ist somit eine Verschlußeinrichtung 23 realisiert. Befindet sich der Sammelbehälter 20 in seiner eingeschobenen Stellung, so sind die genannten Kanäle freigegeben.

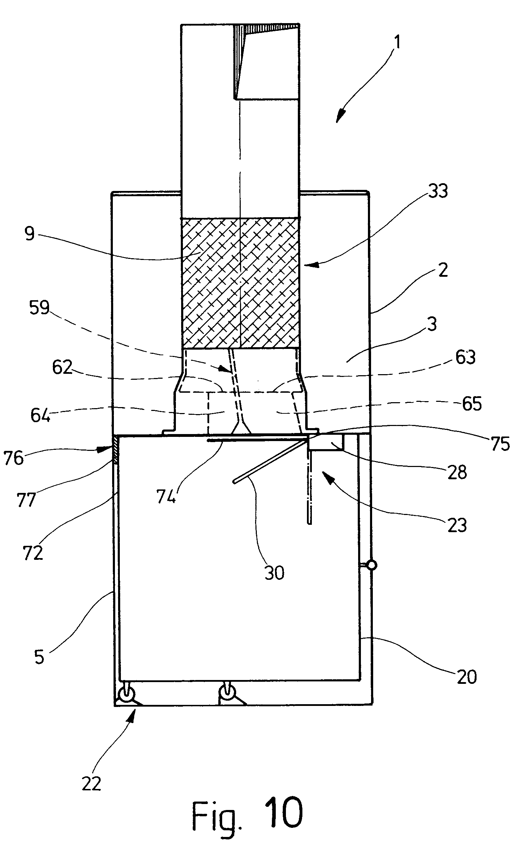

Die Figur 10 zeigt ein Ausführungsbeispiel einer Filtervorrichtung 1, die im wesentlichen dem Ausführungsbeispiel der Figur 4 entspricht, wobei lediglich die Verschlußeinrichtung 23 auf andere Art und Weise ausgebildet ist. Im Ausführungsbeispiel der Figur 10 ist eine Verschlußklappe 74 vorgesehen, die um ein Scharnier 75 verschwenkt werden kann. An der Unterseite der Trennwand 8 ist eine Betätigungseinrichtung 28 angeordnet, die einen elektrischen Antrieb aufweist, mit dem ein Schwenkhebel 30 betätigt werden kann, der mit der Verschlußklappe 74 zusammenwirkt. Die Rückwand 72 des Sammelbehälters 20 weist eine Ausnehmung 76 auf, die es erlaubt, den Sammelbehälter 20 vollständig aus der Behälterkammer 5 herauszuziehen, ohne daß ein Zusammenstoß mit der Betätigungseinrichtung 28 erfolgt. Um undichte Stellen zu vermeiden, ist die Ausnehmung 76 von einer Dichtung 77 umrandet, die mit der Innenseite der Behälterkammer 5 im eingeschobenen Zustand des Sammelbehälters 20 zusammenwirkt.

Es ergibt sich folgende Funktionsweise der Filtervorrichtung, die in den Figuren 4 bis 10 gezeigt ist: Im Betrieb werden Fasern mittels des Tangentialabscheiders 34 am Filtermedium abgeschieden und dann aufgrund der vorliegenden Drallströmung auf einer schraubenlinienförmigen Bahn weiter nach unten bewegt, wodurch sie gegen die Prallwand 59 treten und im Zuge der weiteren Bewegung durch den Faserzuführkanal 64 hindurch in das Innere des Sammelbehälters 20 gelangen. Der mit dieser Bewegung einhergehende Teilluftstrom strömt durch den Luftrückführkanal 65 zurück in den Tangentialabscheider 34. Soll eine Entleerung des Sammelbehälters 20 erfolgen, so sorgt die jeweilige Verschlußeinrichtung 23 dafür, daß der Betrieb während der Entleerungsphase nicht unterbrochen werden muß. Vielmehr wird zumindest der Faserzuführkanal 64 und auch der Luftrückführkanal 65 mittels des Schiebers 73 beziehungsweise der Klappe 74 verschlossen, so daß keine Fasern in die Behälterkammer 5 gelangen. Die Verschlußeinrichtung 23 sorgt während der Behälterentleerungsphase dafür, daß geordnete Strömungstechnische Verhältnisse vorliegen, daß insbesondere also keine Fremdluft angesaugt werden kann. Aufgrund der Prallwand 59 sammeln sich während der Behälterentleerungsphase die Fasern oberhalb der Trennwand 8 und können dann -wenn der Sammelbehälter 20 wieder in seine eingeschobene Position verbracht worden ist und die Verschlußeinrichtung 23 wieder ihre Offenstellung einnimmt- in den Sammelbehälter 20 überführt werden.

Die Betriebsführung erfolgt entweder manuell oder automatisch stets derart, daß die Verschlußeinrichtung 23 ihre Offenstellung nur dann einnimmt, wenn der Sammelbehälter 20 in vollständig eingeschobener Stellung steht. Verläßt er diese Stellung, so wird die Verschlußeinrichtung 23 in Schließstellung verbracht.

## Patentansprüche

1. Filtervorrichtung zum Abscheiden von Fasern/Staub aus strömender Luft, mit einem Abscheider, dem die Luft über mindestens ein Lufteinlaßrohr zugeführt wird und der einen Hohlfilter aufweist, dessen Mantelwand von einem Filtermedium gebildet ist, die von innen nach außen von der Luft durchströmt wird, und mit einem Sammelbehälter für die abgeschiedenen Fasern, der sich unterhalb des Abscheiders befindet, **dadurch gekennzeichnet,** daß der Abscheider (33) als Tangentialabscheider (34) ausgebildet ist, in dessen oberen Bereich (13) das Lufteinlaßrohr (14) tangential mündet und daß für einen rückwirkungsfreien Betrieb zwischen Hohlfilter (9) und Sammelbehälter (20) eine den Faseraustrag bei einer Sammelbehälterentleerung oder dergleichen unterbrechende Verschlußeinrichtung (23) angeordnet ist.

2. Filtervorrichtung nach Anspruch 1, **gekennzeichnet durch** einen die Strömung der Luft bewirkenden Ventilator (17).

3. Filtervorrichtung nach einem der vorhergehenden Ansprüche, **dadurch gekennzeichnet**, daß der Ventilator (17) als Saugventilator (18) ausgebildet ist.

4. Filtervorrichtung nach einem der vorhergehenden Ansprüche, **dadurch gekennzeichnet**, daß in den oberen Bereich (13) des Tangentialabscheiders (34) ein Lufteinlaßrohr (14) tangential mündet.

5. Filtervorrichtung nach einem der vorhergehenden Ansprüche, **dadurch gekennzeichnet**, daß die Verschlußeinrichtung (23) als Verschlußklappe (24) ausgebildet ist.

6. Filtervorrichtung nach einem der vorhergehenden Ansprüche, **dadurch gekennzeichnet**, daß die Verschlußklappe (24) mittels einer Betätigungseinrichtung (28) verschwenkbar ist.

7. Filtervorrichtung nach einem der vorhergehenden Ansprüche, **dadurch gekennzeichnet**, daß die Betätigungseinrichtung (28) einen elektrischen Antrieb (29) aufweist.

8. Filtervorrichtung nach einem der vorhergehenden Ansprüche, **dadurch gekennzeichnet**, daß der Sammelbehälter (20) aus einer Sammelstellung in eine Entleerungsstelle verlagerbar ist.

9. Filtervorrichtung nach Anspruch 8, **dadurch gekennzeichnet**, daß der Sammelbehälter (20) seitlich verschiebbar gelagert ist.

10. Filtervorrichtung nach einem der vorhergehenden Ansprüche, **dadurch gekennzeichnet**, daß der Sammelbehälter (20) zur Abdichtung zum Abscheider (33) höhenverlagerbar angeordnet ist.

11. Filtervorrichtung nach einem der vorhergehenden Ansprüche, **dadurch gekennzeichnet**, daß Hohlfilter (9) und Sammelbehälter (20) über mindestens zwei Öffnungen (60, 61) miteinander in Verbindung stehen, wobei die eine Öffnung (60) eine mittels der Verschlußeinrichtung (23) absperrbare Faserzuführöffnung (62) und die andere Öffnung (61) eine mittels der (23) oder einer weiteren Verschlußeinrichtung absperrbare Luftrückführöffnung (63) bildet und daß sich zwischen den Öffnungen (62,63) eine Prallwand (59) für die Fasern befindet.

12. Filtervorrichtung nach einem der vorhergehenden Ansprüche, **dadurch gekennzeichnet**, daß die Faserzuführöffnung (62) in bezug zur Hohlfiltermittelachse (67) außermittig angeordnet ist und sich hinsichtlich der Strömungsrichtung eine die Fasern transportierenden Drallströmung (66) vor der Prallwand (59) befindet.

13. Filtervorrichtung nach einem der vorhergehenden Ansprüche, **dadurch gekennzeichnet**, daß sich die Luftrückführöffnung (63) im Bezug zur Drallströmung (66) hinter der Prallwand (59) befindet.

14. Filtervorrichtung nach einem der vorhergehenden Ansprüche, **dadurch gekennzeichnet**, daß die Mantelwand (10) des Hohlfilters (9) eine kreiszylindrische Ausbildung aufweist.

15. Filtervorrichtung nach einem der vorhergehenden Ansprüche, **dadurch gekennzeichnet**, daß die Prallwand (59) einen radialen Verlauf aufweist.

16. Filtervorrichtung nach einem der vorhergehenden Ansprüche, **dadurch gekennzeichnet**, daß die Prallwand (59) schräg der Drallströmung (66) entgegengeneigt angeordnet ist.

17. Filtervorrichtung nach einem der vorhergehenden Ansprüche, **dadurch gekennzeichnet**, daß ein Teil (68) der Prallwand (69) die Faserzuführöffnung (62) und/oder die Luftrückführöffnung (63) nach oben überragt.

18. Filtervorrichtung nach einem der vorhergehenden Ansprüche, **dadurch gekennzeichnet**, daß die Prallwand (59) die Faserzuführöffnung (62) und/oder die Luftrückführöffnung (63) in radialer Richtung überragt, insbesondere etwa von der Mantelwand (10) des Hohlfilters (9) bis etwa zur Hohlfiltermittelachse (67) verläuft.

19. Filtervorrichtung nach einem der vorhergehenden Ansprüche, **dadurch gekennzeichnet**, daß die Faserzuführöffnung (62) und/oder die Luftrückführöffnung (63) an die Mantelwand (10) des Hohlfilters (9) angrenzt.

20. Filtervorrichtung nach einem der vorhergehenden Ansprüche, **dadurch gekennzeichnet**, daß die Faserzuführöffnung (62) und/oder die Luftrückführöffnung (63) einem Faserzuführkanal (64) beziehungsweise einem Luftrückführkanal (65) angehören.

21. Filtervorrichtung nach einem der vorhergehenden Ansprüche, **dadurch gekennzeichnet**, daß der Faserzuführkanal (64) und/oder der Luftrückführkanal (65) geneigt zur Hohlfiltermittelachse (67) verlaufen.

22. Filtervorrichtung nach einem der vorhergehenden Ansprüche, **dadurch gekennzeichnet**, daß die Prallwand (59) an ihrem unteren Endbereich (70) im Bereich des Faserzuführkanals (64) und/oder des Luftrückführkanals (65) sich verbreiternd ausgebildet ist.

23. Filtervorrichtung nach einem der vorhergehenden Ansprüche, **dadurch gekennzeichnet**, daß der untere Endbereich (70) von zwei sich aufspreizenden Wänden gebildet ist.
